# EUROPÄISCHE PATENTSCHRIFT

(11) **EP 3 611 047 B1**
(45) Veröffentlichungstag und Bekanntmachung des Hinweises auf die Patenterteilung: **06.09.2023**
(21) Anmeldenummer: 19183906.7
(22) Anmeldetag: 02.07.2019
(51) Int. Cl.: B60L 53/30, H02G 3/04, B62B 3/00, B62B 3/04, B63B 5/00, H02J 7/00, H02J 7/34, B62B 5/00

(54) **TRANSPORTVORRICHTUNG FÜR EINE MOBILE LADESÄULE UND MOBILES LADESÄULENSYSTEM**
TRANSPORT DEVICE FOR A MOBILE CHARGING COLUMN AND MOBILE CHARGING COLUMN SYSTEM
DISPOSITIF DE TRANSPORT POUR UNE COLONNE DE CHARGE MOBILE ET SYSTÈME DE COLONNE DE CHARGE MOBILE

(30) Priorität: 13.08.2018 DE 102018213613
(43) Veröffentlichungstag der Anmeldung: 19.02.2020
(73) Patentinhaber: Volkswagen AG, 38440 Wolfsburg (DE)
(72) Erfinder: Wolf, Fabian, 38110 Braunschweig (DE)

(56) Entgegenhaltungen:
- EP-A1- 2 718 221
- EP-B1- 2 718 221
- WO-A1-94/07789
- DE-A1- 19 952 042
- DE-A1-102007 046 565
- DE-A1-102008 056 895
- DE-U1-202009 009 056
- DE-U1-202012 104 800
- FR-A1- 2 634 447
- FR-A1- 2 974 781
- US-B1- 9 592 742
- Willenbrock: "Hubwagen Verladehilfe | Hebehilfe zum Transport von Hubwagen", , 17 August 2018 (2018-08-17), pages 1-7, XP055911238, Retrieved from the Internet: URL:https://www.willenbrockshop.de/Verlade hilfe-Hubwagen::2489.html [retrieved on 2022-04-11]

## Beschreibung

Die vorliegende Erfindung betrifft eine Transportvorrichtung zum Bewegen einer mobilen Ladesäule, welche zum Laden einer Batterie eines Elektrofahrzeugs ausgebildet ist. Ferner betrifft die Erfindung ein mobiles Ladesäulensystem mit einer mobilen Ladesäule und einer erfindungsgemäßen Transportvorrichtung mit integriertem, insbesondere abnehmbaren, Anfahrschutz.

Zum Laden von Batterien von Elektroautos sind unterschiedliche Ladesäuleninfrastrukturen bekannt. Im Wesentlichen wird hier zwischen zwei Ladesäuleninfrastrukturen unterschieden, nämlich einer Ladesäuleninfrastruktur mit stationären Ladesäulen und einer Ladesäuleninfrastruktur mit mobilen Ladesäulen.

Stationäre Ladesäulen sind fest an einem Ort installiert und an ein Stromnetz angebunden. Die stationären Ladesäulen weisen eine Ladesäulenschnittstelle zum elektrischen Koppeln der Ladesäule mit einer Elektrofahrzeugschnittstelle eines Elektrofahrzeugs auf. Die Ladesäulenschnittstelle ist beispielsweise als Ladesäulenbuchse oder Ladesäulenstecker mit einem Ladekabel ausgebildet. Mittels einer Leistungselektronik der stationären Ladesäule ist ein Ladevorgang der Batterie des Elektrofahrzeugs steuerbar. Die zum Laden der Batterie erforderliche elektrische Energie wird aus dem Stromnetz bezogen. Zudem können spezielle stationäre Ladesäulen ausgebildet sein, elektrische Energie vom Elektrofahrzeug aufzunehmen und direkt an das Stromnetz weiterzuleiten. Dieses Konzept ist beispielsweise für ein Stromnetz konzipiert, welches relativ starken Schwankungen unterliegt, beispielsweise da es zu einem verhältnismäßig großen Anteil aus regenerativen Energieumwandlern, wie beispielsweise Windrädern oder Photovoltaikanlagen, gespeist wird. Bei Sonnenschein und/oder kräftigen Winden ist verhältnismäßig viel Strom produzierbar, während nachts und bei Windstille verhältnismäßig wenig Strom erzeugbar ist. Wenn der aktuelle Energiebedarf nicht durch die zur Verfügung stehenden Energieumwandler gedeckt werden kann, kann die in der Batterie gespeicherte elektrische Energie zurückgegriffen werden. Eine hierfür ausgebildete stationäre Ladesäule ist beispielsweise aus der DE 10 2016 202 798 A1 bekannt.

Mobile Ladesäulen unterscheiden sich von stationären Ladesäulen im Wesentlichen in drei Merkmalen. Zunächst sind mobile Ladesäulen nicht wie stationäre Ladesäulen fest an einem Ort verankert, sondern nur an einem Ort temporär abgestellt und allenfalls über eine Sicherungsvorrichtung gegen ein unbefugtes Bewegen der mobilen Ladesäule gesichert. Ferner weisen mobile Ladesäulen einen internen Energiespeicher zum Speichern elektrischer Energie sowie zum Abgeben der elektrischen Energie an eine zu ladende Batterie eines Elektrofahrzeugs auf. Überdies weisen mobile Ladesäulen keine permanente elektrische Verbindung mit dem Stromnetz auf. Eine elektrische Kopplung mit dem Stromnetz ist lediglich zum Aufladen des internen Energiespeichers erforderlich. Hierfür werden mobile Ladesäulen meistens von ihrem Aufstellungsort entfernt und zu einer mit dem Stromnetz gekoppelten Ladestation gebracht. Die mobile Ladesäule weist hierfür neben der Ladesäulenschnittstelle zum elektrischen Koppeln mit einem Elektrofahrzeug eine Ladestationsschnittstelle auf, welche oftmals an einem schwer zugänglichen Bereich der mobilen Ladesäule angeordnet ist. Zum möglichst schnellen Laden des internen Energiespeichers über die Ladestation ist eine zusätzliche Leistungselektronik mit einer höheren Leistung als die Leistungselektronik zum Laden der Batterie des Elektrofahrzeugs erforderlich. Eine gattungsgemäße mobile Ladesäule mit einer Ladesäulenschnittstelle sowie einer Ladestationsschnittstelle ist beispielsweise aus der DE10 2011 107 628 A1 bekannt.

Mobile Ladesäulen haben gegenüber stationären Ladesäulen den Vorteil, dass diese an nahezu jedem beliebigen Aufstellungsort aufstellbar sind. Ein Anschluss an das Stromnetz ist am Aufstellungsort nicht erforderlich, sodass mobile Ladesäulen besondere flexibel einsetzbar sind. Überdies hat der interne Energiespeicher den Vorteil, dass mobile Ladesäulen auch bei einem temporären Zusammenbruch des Stromnetzes betreibbar sind, da sie bis zum erforderlichen Aufladen des internen Energiespeichers vom Stromnetz autark betreibbar sind. Bekannte mobile Ladesäulen haben den Nachteil, dass sie, insbesondere aufgrund ihres hohen Eigengewichts, welches oftmals bis zu drei Tonnen beträgt, nur schwer und zumeist nur unter Verwendung aufwendiger Hilfsmittel, wie beispielsweise eines Krans oder eines Gabelstaplers, bewegbar sind.

Aus der CN 107618389 A ist eine Transportvorrichtung zum Bewegen einer mobilen Ladesäule bekannt. Die Transportvorrichtung weist eine Plattform auf, auf welcher die mobile Ladesäule temporär fixierbar ist. Die Plattform weist mehrere Räder sowie eine Feststellbremse auf. Eine derartige Transportvorrichtung hat den Nachteil, dass ein Anordnen der mobilen Ladesäule auf der Transportvorrichtung sowie ein Abladen der mobilen Ladesäule von der Transportvorrichtung nur unter Verwendung von aufwendigen sowie kostenintensiven Hilfsmitteln möglich sind.

Die DE 10 2013 112 845 A1 offenbart ein transportables Gehäuse für mobile Ladestationen. Das transportable Gehäuse ist beispielsweise gemäß eines 20- oder 40-Fuß Containers ausgebildet. Ein gattungsgemäßes Gehäuse hat den Nachteil, dass zum Bewegen des Gehäuses sowie zum Anordnen der mobilen Ladesäule in dem Gehäuse und zum Abladen der mobilen Ladesäule aus dem Gehäuse ebenfalls aufwendige sowie kostenintensive Hilfsmittel erforderlich sind.

Aus der US 2012/0161703 A1 ist ein Handwagen zum Bewegen einer mobilen Ladevorrichtung für ein Elektrofahrzeug bekannt. Der Handwagen weist mehrere Räder sowie eine Griffstange zum Verschieben auf. Ein derartiger Handwagen ist nur zum Tragen kleiner Ladevorrichtungen ausgebildet. Zudem sind ein Anordnen der der Ladevorrichtung auf dem Handwagen sowie ein Abladen der Ladevorrichtung von dem Handwagen sehr schwierig und nur unter hohem Aufwand durchführbar. Aus den DE 199 52 042 A1, FR 2 974 781 A1, WO 94/07789 A1, DE 10 2007 046565 A1, DE 10 2008 056 895 A1 und FR 2 634 447 A1 sind weitere Transportvorrichtungen bekannt.

Es ist daher Aufgabe der vorliegenden Erfindung, die voranstehend beschriebenen Nachteile bei einer Transportvorrichtung zum Bewegen einer mobilen Ladesäule sowie bei einem mobilen Ladesäulensystem zu beheben oder zumindest teilweise zu beheben. Insbesondere ist es Aufgabe der vorliegenden Erfindung eine Transportvorrichtung zum Bewegen einer mobilen Ladesäule sowie ein mobiles Ladesäulensystem zu schaffen, die auf eine einfache und kostengünstige Art und Weise eine Handhabung beim Bewegen der mobilen Ladesäule verbessern und einen Anfahrschutz gewährleisten.

Voranstehende Aufgabe wird durch die Patentansprüche gelöst. Demnach wird die Aufgabe durch eine Transportvorrichtung mit den Merkmalen des unabhängigen Anspruchs 1 und ein mobiles Ladesäulensystem mit den Merkmalen des nebengeordneten Anspruchs 8 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Transportvorrichtung beschrieben sind, selbstverständlich auch im Zusammenhang mit dem erfindungsgemäßen mobilen Ladesäulensystem und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch eine Transportvorrichtung zum Bewegen einer mobilen Ladesäule, welche zum Laden einer Batterie eines Elektrofahrzeugs ausgebildet ist, gelöst. Die Transportvorrichtung weist eine Aufnahmevorrichtung zur Aufnahme der mobilen Ladesäule auf, wobei an einer Aufnahmevorrichtungsunterseite der Aufnahmevorrichtung eine erste Rollvorrichtung zum Bewegen der Transportvorrichtung auf einem Untergrund angeordnet ist. Erfindungsgemäß ist an einer Aufnahmevorrichtungsoberseite der Aufnahmevorrichtung eine zweite Rollvorrichtung zum Bewegen der mobilen Ladesäule relativ zur Aufnahmevorrichtung angeordnet, wobei die Aufnahmevorrichtung mehrere Ausnehmungen zum Eingreifen einer Gabel eines Gabelstaplers aufweist. Zudem weist die Transportvorrichtung eine Anfahrschutzvorrichtung zum Schützen der Transportvorrichtung vor einer Kollision mit einem Kraftfahrzeug auf, wobei die Anfahrschutzvorrichtung verschwenkbar an der Aufnahmevorrichtung angeordnet ist.

Die Transportvorrichtung ist zum Bewegen der mobilen Ladesäule, welche zum Laden einer Batterie eines Elektrofahrzeugs ausgebildet ist, ausgebildet. Unter einer Batterie eines Elektrofahrzeugs wird in diesem Zusammenhang insbesondere eine Hauptbatterie zum Bereitstellen elektrischer Energie für einen Elektromotor zum Antreiben des Elektrofahrzeugs verstanden. Derartige Batterien weisen eine wesentlich größere Kapazität als herkömmliche Fahrzeugbatterien von klassischen Kraftfahrzeugen mit einem Verbrennungsmotor auf.

Mobile Ladesäulen zum Laden einer Batterie eines Elektrofahrzeugs weisen einen internen Energiespeicher zum Speichern elektrischer Energie sowie zum Abgeben der elektrischen Energie zum Laden der Batterie des Elektrofahrzeugs auf. Um ein vollständiges Aufladen mehrerer Batterien von Elektrofahrzeugen innerhalb eines Betriebszyklus der mobilen Ladesäule zu gewährleisten, sind die internen Energiespeicher mobiler Ladesäulen entsprechend groß dimensioniert, sodass mobile Ladesäulen oftmals ein Gesamtgewicht zwischen zwei und drei Tonnen aufweisen können. Unter einem Betriebszyklus einer mobilen Ladesäule wird beispielsweise der Zeitraum zwischen dem Start des Aufladens des internen Energiespeichers bis zum nächsten Start des Aufladens des internen Energiespeichers verstanden. Demnach ist die Transportvorrichtung vorzugsweise zum Tragen von Gewichten um die drei Tonnen ausgebildet.

Die Aufnahmevorrichtung ist zum Aufnehmen der mobilen Ladesäule ausgebildet. Beispielsweise ist die Aufnahmevorrichtung als Plattform, Rahmen, Gerüst oder dergleichen ausgebildet. Demnach weist die Aufnahmevorrichtung insbesondere mehrere Aufnahmeflächen auf, auf welchen die mobile Ladesäule abstellbar ist. Die Aufnahmevorrichtung ist vorzugsweise zum Tragen von Lasten von drei oder mehr Tonnen ausgebildet und weist eine Verwindungssteifigkeit auf, welche ein sicheres Aufnehmen sowie Tragen einer drei Tonnen schweren mobilen Ladesäule gewährleistet.

Die erste Rollvorrichtung ist an der Aufnahmevorrichtungsunterseite der Aufnahmevorrichtung und die zweite Rollvorrichtung an der Aufnahmevorrichtungsoberseite der Aufnahmevorrichtung angeordnet. Unter einer Anordnung an der Aufnahmevorrichtungsunterseite wird im Rahmen der Erfindung verstanden, dass die erste Rollvorrichtung ausgebildet ist, einen Spalt zwischen der Aufnahmevorrichtungsunterseite und dem Untergrund herzustellen. Dabei kann es erfindungsgemäß auch vorgesehen sein, dass die erste Rollvorrichtung zumindest teilweise an einer Aufnahmevorrichtungsseite der Aufnahmevorrichtung gelagert ist. Ebenso wird im Rahmen der Erfindung unter einer Anordnung an der Aufnahmevorrichtungsoberseite verstanden, dass die zweite Rollvorrichtung ausgebildet ist, einen Spalt zwischen der Aufnahmevorrichtungsunterseite und der mobilen Ladesäule herzustellen. Dabei kann es erfindungsgemäß auch vorgesehen sein, dass die zweite Rollvorrichtung zumindest teilweise an der Aufnahmevorrichtungsseite der Aufnahmevorrichtung gelagert ist.

Mittels der ersten Rollvorrichtung ist die Transportvorrichtung auf dem Untergrund bewegbar. Die erste Rollvorrichtung weist vorzugsweise mehrere erste Rollmittel auf, die insbesondere über die Aufnahmevorrichtungsunterseite verteilt an der Aufnahmevorrichtung angeordnet sind. Die ersten Rollmittel können beispielsweise als Rollen, Walzen, Kugeln, Räder oder dergleichen ausgebildet sein. Es ist auch eine Kombination unterschiedlicher erster Rollmittel erfindungsgemäß denkbar, beispielsweise eine Kombination aus Walzen und schwenkbaren Rädern und/oder Kugeln, um eine Lenkbarkeit der Transportvorrichtung zu verbessern. Ferner kann ein Motor zum Antreiben mindestens eines der ersten Rollmittel vorgesehen sein, um ein Bewegen der Transportvorrichtung relativ zum Untergrund zu verbessern. In diesem Fall ist vorzugsweise eine Energieschnittstelle zum elektrischen Koppeln der Transportvorrichtung mit der mobilen Ladesäule vorgesehen.

Mittels der zweiten Rollvorrichtung ist die mobile Ladesäule relativ zur Transportvorrichtung bewegbar. Die zweite Rollvorrichtung weist vorzugsweise mehrere zweite Rollmittel auf, die insbesondere über die Aufnahmevorrichtungsoberseite verteilt an der Aufnahmevorrichtung angeordnet sind. Die zweiten Rollmittel können beispielsweise als Rollen, Walzen, Kugeln, Räder oder dergleichen ausgebildet sein. Es ist auch eine Kombination unterschiedlicher zweiter Rollmittel erfindungsgemäß denkbar, beispielsweise eine Kombination aus Walzen und schwenkbaren Rädern und/oder Kugeln, um eine Ausrichtbarkeit der mobilen Ladesäule auf der Transportvorrichtung zu verbessern. Gemäß einer bevorzugten Ausführungsform weist die zweite Rollvorrichtung einen, insbesondere mehrere voneinander beabstandete Bänder aufweisenden, Bandförderer auf. Ferner kann ein Motor zum Antreiben mindestens eines der zweiten Rollmittel vorgesehen sein, um ein Bewegen der mobilen Ladesäule relativ zur Transportvorrichtung zu verbessern. In diesem Fall ist vorzugsweise eine Energieschnittstelle zum elektrischen Koppeln der Transportvorrichtung mit der mobilen Ladesäule vorgesehen.

Die Ausnehmungen sind vorzugsweise an einer Aufnahmevorrichtungsseite der Aufnahmevorrichtung, insbesondere in einem untergrundnahen Bereich, ausgebildet. Es kann erfindungsgemäß vorgesehen sein, dass die Ausnehmungen nach unten, also zum Untergrund hin, offen ausgebildet sind. Dies hat den Vorteil, dass eine Bewegbarkeit der Transportvorrichtung und somit auch der mobilen Ladesäule mittels eines Gabelstaplers oder eines Hubwagens mit einfachen Mitteln sowie auf eine kostengünstige Art und Weise verbessert ist. Die mobile Ladesäule benötigt keine derartigen Ausnehmungen und ist somit einfacher herstellbar.

Die Transportvorrichtung weist eine Anfahrschutzvorrichtung zum Schützen der Transportvorrichtung vor einer Kollision mit einem Kraftfahrzeug auf, die verschwenkbar an der Aufnahmevorrichtung angeordnet ist. Die Anfahrschutzvorrichtung weist vorzugsweise eine Stoßstange und/oder einen Stoßbügel oder dergleichen auf. Vorzugsweise ist die Anfahrschutzvorrichtung an mindestens einer Aufnahmevorrichtungsseite der Aufnahmevorrichtung angeordnet.

Vorzugsweise ist die Verschwenkbarkeit der Anfahrschutzvorrichtung mit einer Versenkbarkeit der ersten Rollvorrichtung mechanisch gekoppelt. Diese Kopplung ist vorzugsweise derart ausgebildet, dass bei ausgefahrener erster Rollvorrichtung die Anfahrschutzvorrichtung zur Aufnahmevorrichtung hin und bei eingefahrener erster Rollvorrichtung die Anfahrschutzvorrichtung von der Aufnahmevorrichtung weggeschwenkt ist. Alternativ kann eine mechanische Kopplung der Anfahrschutzvorrichtung mit der Befestigungsvorrichtung vorgesehen sein. Diese Kopplung ist vorzugsweise derart ausgebildet, dass bei nicht aktivierter Befestigungsvorrichtung die Anfahrschutzvorrichtung zur Aufnahmevorrichtung hin und bei aktivierter Befestigungsvorrichtung die Anfahrschutzvorrichtung von der Aufnahmevorrichtung weggeschwenkt ist. Vorzugsweise ist die Anfahrschutzvorrichtung in mindestens einer Schwenkposition, insbesondere in einer von der Aufnahmevorrichtung weggeschwenkten Position, also in welcher die Anfahrschutzvorrichtung die Aufnahmevorrichtung vor seitlichen Kollisionen schützt, verriegelbar und/oder abschließbar ausgebildet.

Eine erfindungsgemäße Transportvorrichtung hat gegenüber herkömmlichen Transportvorrichtungen den Vorteil, dass mit einfachen Mitteln sowie auf eine kostengünstige Art und Weise ein Aufstellen einer mobilen Ladesäule an einem Aufstellungsort verbessert ist. Mittels der ersten Rollvorrichtung der Transportvorrichtung ist die mobile Ladesäule an den Aufstellungsort heranbewegbar und mittels der zweiten Rollvorrichtung von der Transportvorrichtung abladbar. Ebenso ist ein Wegbewegen der mobilen Ladesäule vom Aufstellungsort verbessert. Mittels der zweiten Rollvorrichtung ist die mobile Ladesäule auf die Transportvorrichtung aufladbar und mittels der ersten Rollvorrichtung der Transportvorrichtung von dem Aufstellungsort wegbewegbar. Die mobile Ladesäule ist zusammen mit der Transportvorrichtung oder ohne die Transportvorrichtung am Aufstellungsort aufgestellt werden. Ein weiterer Vorteil einer erfindungsgemäßen Transportvorrichtung ist, dass die mobile Ladesäule keine integrierte Transportvorrichtung aufweisen muss. Auf diese Weise können die Herstellungskosten der mobilen Ladesäule reduziert werden, zudem ist somit eine Wartung der mobilen Ladesäule verbesserbar. Eine Anfahrschutzvorrichtung hat den Vorteil, dass die Transportvorrichtung sowie eine auf der Transportvorrichtung angeordnete mobile Ladesäule beim Bewegen mittels der ersten Rollvorrichtung vor Kollisionen, beispielsweise mit Gebäuden, Bäumen, Leitplanken, Zäunen, Bordsteinen, Rampen, Kraftfahrzeugen oder dergleichen, geschützt sind. Zudem sind die am Aufstellungsort aufgestellte Transportvorrichtung und die auf der Transportvorrichtung angeordnete mobile Ladesäule vor Kollisionen mit Kraftfahrzeugen, wie beispielsweise einem zum Laden der Batterie an die mobile Ladesäule heranfahrenden Elektrofahrzeug, geschützt. Eine Verschwenkbarkeit der Anfahrschutzvorrichtung hat den Vorteil, dass die Anfahrschutzvorrichtung mit einfachen Mitteln sowie kostengünstig bedarfsgerecht relativ zur Aufnahmevorrichtung anordenbar ist.

Gemäß einer bevorzugten Weiterentwicklung der Erfindung kann bei einer Transportvorrichtung vorgesehen sein, dass die erste Rollvorrichtung und/oder die zweite Rollvorrichtung versenkbar oder zumindest teilweise versenkbar an der Aufnahmevorrichtung angeordnet sind. Unter einer Versenkbarkeit wird im Rahmen der Erfindung eine Verstellbarkeit verstanden, mittels welcher die Rollvorrichtung komplett oder zumindest teilweise versenkbar ist. Dabei ist es bevorzugt, dass die Versenkbarkeit derart ausgebildet ist, dass ein Bewegen der Transportvorrichtung relativ zum Untergrund mittels der ersten Rollvorrichtung oder ein relatives Bewegen der mobilen Ladesäule relativ zur Aufnahmevorrichtung mittels der zweiten Rollvorrichtung nicht möglich oder zumindest eingeschränkt ist, insbesondere durch ein mit dem Versenken einhergehenden Zusammenführen von Kontaktflächen von Transportvorrichtung und Untergrund beziehungsweise Aufnahmevorrichtung und mobiler Ladesäule. Eine Versenkbarkeit mindestens einer Rollvorrichtung hat den Vorteil, dass mit einfachen Mitteln sowie auf eine kostengünstige Art und Weise eine Bewegungsfunktion der jeweiligen Rollvorrichtung einschränkbar beziehungsweise abstellbar ist, sodass ungewollte Relativbewegungen verhinderbar sind. Ferner ist hierfür keine zusätzliche Bremsvorrichtung für die Rollvorrichtung erforderlich.

Vorzugsweise weist die Aufnahmevorrichtung eine Befestigungsvorrichtung zum Befestigen der mobilen Ladesäule auf der Aufnahmevorrichtung auf. Die Befestigungsvorrichtung kann beispielweise eine Eingreifvorrichtung, wie beispielsweise eine Stange, ein Profilkörper oder dergleichen, aufweisen, welche zum Eingreifen in eine hierfür ausgebildete Ausnehmung der mobilen Ladesäule ausgebildet ist. Hierdurch ist ein formschlüssiger Halt der mobilen Ladesäule an der Transportvorrichtung bewirkbar. Alternativ oder zusätzlich kann die Befestigungsvorrichtung eine Klemmvorrichtung zum Klemmen eines Abschnitts der mobilen Ladesäule, wie beispielsweise eines Sockels, Absatzes oder dergleichen, an die Aufnahmevorrichtungsoberseite aufweisen. Vorzugsweise ist die Befestigungsvorrichtung als Diebstahlschutz, insbesondere abschließbar, ausgebildet. Eine Befestigungsvorrichtung hat den Vorteil, dass ein unbeabsichtigtes Abgleiten oder Herunterfallen der mobilen Ladesäule von der Transportvorrichtung mit einfachen Mitteln sowie auf eine kostengünstige Art und Weise verhinderbar ist.

Es ist erfindungsgemäß bevorzugt, dass die Transportvorrichtung eine Griffvorrichtung zum Ziehen und/oder Schieben der Transportvorrichtung aufweist. Weiter bevorzugt ist die Griffvorrichtung zum Drehen der Transportvorrichtung um eine vertikale Drehachse ausgebildet. Somit ist die Griffvorrichtung zum Bewegen der Transportvorrichtung, insbesondere zum Heranbewegen an den Aufstellungsort, zum Ausrichten am Aufstellungsort sowie zum Fortbewegen vom Aufstellungsort ausgebildet. Die Griffvorrichtung weist vorzugsweise eine Griffstange oder dergleichen auf. Weiter bevorzugt ist die Griffvorrichtung an der Aufnahmevorrichtung, insbesondere verschwenkbar, abnehmbar oder dergleichen, angeordnet. Bei einer abnehmbaren Griffvorrichtung ist es bevorzugt, dass diese mit einer Kupplungsvorrichtung der Transportvorrichtung koppelbar ist, wobei die Kupplungsvorrichtung vorzugsweise zusätzlich zum Koppeln weiterer Elemente, wie beispielsweise einer Anhängerkupplung, einer Rampe oder dergleichen, ausgebildet ist. Es kann erfindungsgemäß vorgesehen sein, dass die Aufnahmevorrichtung und die Griffvorrichtung zum vollständigen oder teilweisen Versenken der Griffvorrichtung in der Aufnahmevorrichtung ausgebildet sind. Es kann erfindungsgemäß vorgesehen sein, dass die Griffvorrichtung als Anfahrschutz ausgebildet ist. Eine derartige Griffvorrichtung kann am Aufstellort an der Ladesäule verbleiben.

In einer bevorzugten Ausgestaltung der Erfindung weist die Transportvorrichtung eine an der Aufnahmevorrichtung angeordnete Rampe zum Abladen der mobilen Ladesäule auf, wobei die Rampe insbesondere ausfahrbar und/oder um eine horizontale Schwenkachse verschwenkbar an der Aufnahmevorrichtung angeordnet ist. Die Rampe ist vorzugsweise an die Aufnahmevorrichtungsoberseite der Aufnahmevorrichtung angebunden, sodass das Bewegen der mobilen Ladesäule von der Aufnahmevorrichtung auf die Rampe sowie von der Rampe auf die Aufnahmevorrichtung verbessert ist. Vorzugsweise weist die Rampe eine Gleitfläche und/oder dritte Rollvorrichtung oder dergleichen auf. Die dritte Rollvorrichtung weist vorzugsweise mehrere dritte Rollmittel auf, die insbesondere über die Rampe verteilt an der Rampe angeordnet sind. Die dritten Rollmittel können beispielsweise als Rollen, Walzen, Kugeln, Räder oder dergleichen ausgebildet sein. Alternativ oder zusätzlich kann die dritte Rollvorrichtung einen, insbesondere mehrere voneinander beabstandete Bänder aufweisenden, Bandförderer auf. Ferner kann ein Motor zum Antreiben mindestens eines der dritten Rollmittel vorgesehen sein, um ein Bewegen der mobilen Ladesäule relativ zur Rampe zu verbessern. In diesem Fall ist vorzugsweise eine Energieschnittstelle zum elektrischen Koppeln der Transportvorrichtung mit der mobilen Ladesäule vorgesehen. Vorzugsweise sind die Rampe sowie die Aufnahmevorrichtung zum teilweisen oder vollständigen Versenken der Rampe in der Aufnahmevorrichtung ausgebildet. Ebenfalls bevorzugt sind die Rampe und die zweite Rollvorrichtung zum zahnartigen Ineinandergreifen ausgebildet. Erfindungsgemäß kann die Rampe abnehmbar an der Transportvorrichtung angeordnet sein. Eine Rampe hat den Vorteil, dass ein Beladen der Transportvorrichtung mit der mobilen Ladesäule sowie ein Entladen der mobilen Ladesäule, insbesondere im Bereich des Aufstellungsorts der mobilen Ladesäule, wenn keine Kranvorrichtung verfügbar ist, mit einfachen Mitteln sowie auf eine kostengünstige Art und Weise verbessert ist.

In einer besonders bevorzugten Ausgestaltung der Erfindung sind an der Aufnahmevorrichtung mehrere Hebeanschlüsse zum mechanischen Koppeln mit einem Krangeschirr eines Krans angeordnet. Der Hebeanschluss ist vorzugsweise als Öse, Haken, Stange oder dergleichen ausgebildet. Der Hebeanschluss kann erfindungsgemäß als zusätzliches Bauteil an der Aufnahmevorrichtung, insbesondere durch Verschrauben, befestigt sein. Alternativ kann der Hebeanschluss in der Aufnahmevorrichtung ausgebildet sein. Die Hebeanschlüsse sind vorzugsweise gleichmäßig an der Aufnahmevorrichtung angeordnet und weisen vorzugsweise einen relativ großen Abstand zueinander auf, um das Risiko eines Kippens der Transportvorrichtung beim Hochheben mit einem Kran zu reduzieren. Dies hat den Vorteil, dass eine Anhebbarkeit der Transportvorrichtung und somit auch der mobilen Ladesäule mittels eines Krans oder dergleichen mit einfachen Mitteln sowie auf eine kostengünstige Art und Weise verbessert ist. Die mobile Ladesäule benötigt keinen derartigen Hebeanschluss und ist somit einfacher herstellbar.

Vorzugsweise ist die Anfahrschutzvorrichtung abnehmbar ausgebildet. Eine derartige Anfahrschutzvorrichtung hat den Vorteil, dass die Transportvorrichtung sowie eine auf der Transportvorrichtung angeordnete mobile Ladesäule beim Bewegen mittels der ersten Rollvorrichtung vor Kollisionen, beispielsweise mit Gebäuden, Bäumen, Leitplanken, Zäunen, Bordsteinen, Rampen, Kraftfahrzeugen oder dergleichen, geschützt sind. Zudem sind die am Aufstellungsort aufgestellte Transportvorrichtung und die auf der Transportvorrichtung angeordnete mobile Ladesäule vor Kollisionen mit Kraftfahrzeugen, wie beispielsweise einem zum Laden der Batterie an die mobile Ladesäule heranfahrenden Elektrofahrzeug, geschützt.

Gemäß einem zweiten Aspekt der Erfindung wird die Aufgabe durch ein mobiles Ladesäulensystem gelöst. Das mobile Ladesäulensystem weist eine mobile Ladesäule zum Laden einer Batterie eines Elektrofahrzeugs und eine Transportvorrichtung auf. Erfindungsgemäß ist die Transportvorrichtung als erfindungsgemäße Transportvorrichtung ausgebildet.

Die mobile Ladesäule ist zum Laden einer Batterie eines Elektrofahrzeugs ausgebildet und weist hierfür einen internen Energiespeicher zum Speichern elektrischer Energie sowie zum Abgeben der elektrischen Energie zum Laden der Batterie des Elektrofahrzeugs auf. Um ein vollständiges Aufladen mehrerer Batterien von Elektrofahrzeugen innerhalb eines Betriebszyklus der mobilen Ladesäule zu gewährleisten, ist der interne Energiespeicher der mobilen Ladesäule entsprechend groß dimensioniert, sodass die mobile Ladesäule beispielsweise ein Gesamtgewicht zwischen zwei und drei Tonnen aufweisen kann. Unter einem Betriebszyklus der mobilen Ladesäule wird beispielsweise der Zeitraum zwischen dem Start des Aufladens des internen Energiespeichers bis zum nächsten Start des Aufladens des internen Energiespeichers verstanden. Vorzugsweise weist die mobile Ladevorrichtung eine Haltevorrichtung auf, welche zum Zusammenspiel mit einer Befestigungsvorrichtung der Transportvorrichtung zum Befestigen der mobilen Ladesäule an der Aufnahme ausgebildet ist. Die Transportvorrichtung ist vorzugsweise an die Dimension der mobilen Ladesäule angepasst.

Bei dem beschriebenen mobilen Ladesäulensystem ergeben sich sämtliche Vorteile, die bereits zu einer Transportvorrichtung gemäß dem ersten Aspekt der Erfindung beschrieben worden sind. Demnach hat das erfindungsgemäße mobile Ladesäulensystem gegenüber herkömmlichen mobilen Ladesäulensystemen den Vorteil, dass mit einfachen Mitteln sowie auf eine kostengünstige Art und Weise ein Aufstellen der mobilen Ladesäule an einem Aufstellungsort verbessert ist. Mittels der ersten Rollvorrichtung der Transportvorrichtung ist die mobile Ladesäule an den Aufstellungsort heranbewegbar und mittels der zweiten Rollvorrichtung von der Transportvorrichtung abladbar. Ebenso ist ein Wegbewegen der mobilen Ladesäule vom Aufstellungsort verbessert. Mittels der zweiten Rollvorrichtung ist die mobile Ladesäule auf die Transportvorrichtung aufladbar und mittels der ersten Rollvorrichtung der Transportvorrichtung von dem Aufstellungsort wegbewegbar. Die mobile Ladesäule ist zusammen mit der Transportvorrichtung oder ohne die Transportvorrichtung am Aufstellungsort aufgestellt werden. Ein weiterer Vorteil des erfindungsgemäßen mobilen Ladesäulensystems ist, dass die mobile Ladesäule keine integrierte Transportvorrichtung aufweisen muss. Auf diese Weise können die Herstellungskosten der mobilen Ladesäule reduziert werden, zudem ist somit eine Wartung der mobilen Ladesäule verbesserbar.

Eine erfindungsgemäße Transportvorrichtung sowie ein erfindungsgemäßes mobiles Ladesäulensystem werden nachfolgend anhand von Zeichnungen näher erläutert. Es zeigen jeweils schematisch:
- Figur 1: in einer Seitenansicht eine bevorzugte erste Ausführungsform eines erfindungsgemäßen mobilen Ladesäulensystems, und
- Figur 2: in einer Seitenansicht eine bevorzugte zweite Ausführungsform eines erfindungsgemäßen mobilen Ladesäulensystems.

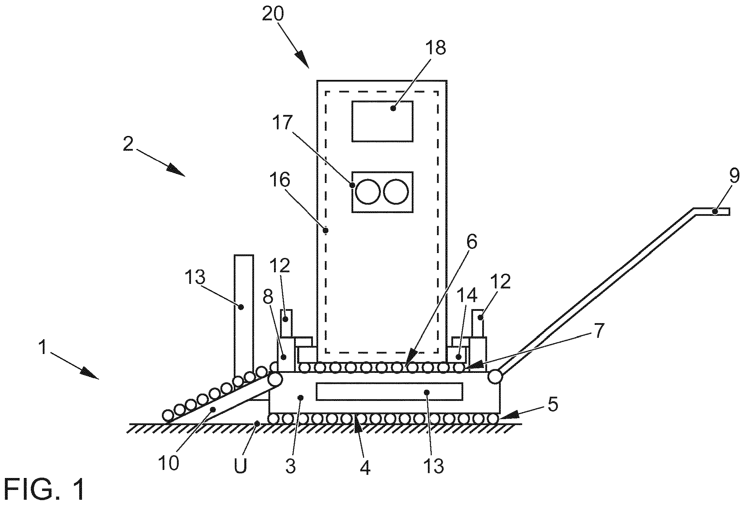

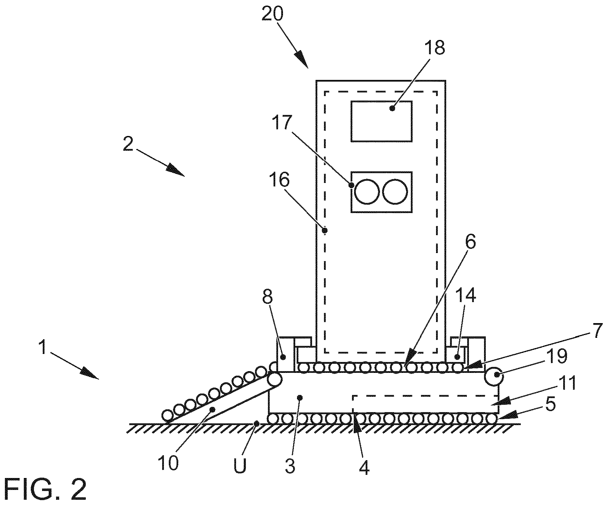

Elemente mit gleicher Funktion und Wirkungsweise sind in den Figuren 1 und 2 jeweils mit denselben Bezugszeichen versehen.

In Fig. 1 ist eine bevorzugte erste Ausführungsform eines erfindungsgemäßen mobilen Ladesäulensystems 20 schematisch in einer Seitenansicht abgebildet. Das mobile Ladesäulensystem 20 weist eine Transportvorrichtung 1 und eine mobile Ladesäule 2 auf, welche auf der Transportvorrichtung 1 angeordnet ist. Die Transportvorrichtung 1 weist eine Aufnahmevorrichtung 3 mit einer Aufnahmevorrichtungsunterseite 4 und einer Aufnahmevorrichtungsoberseite 6 auf. An der Aufnahmevorrichtungsunterseite 4 ist eine erste Rollvorrichtung 5 mit mehreren Rollen oder Walzen zum Verschieben der Transportvorrichtung 1 auf einem Untergrund U angeordnet. An der Aufnahmevorrichtungsoberseite 6 ist eine zweite Rollvorrichtung 7 mit mehreren Rollen oder Walzen zum Verschieben der mobilen Ladesäule 2 relativ zur Transportvorrichtung 1 angeordnet. Die mobile Ladesäule 2 ist auf der zweiten Rollvorrichtung 7 abgestellt und mittels einer als Klemmvorrichtung ausgebildeten Befestigungsvorrichtung 8 der Aufnahmevorrichtung 3 und einer als Absatz ausgebildeten Haltevorrichtung 14 der mobilen Ladesäule 2 an der Aufnahmevorrichtung 3 befestigt. An der Befestigungsvorrichtung 8 ist ein Hebeanschluss 12 zum Koppeln mit einem Krangeschirr eines Krans zum Heben des mobilen Ladesäulensystems 20 angeordnet. Überdies weist die Transportvorrichtung eine schwenkbar an der Aufnahmevorrichtung 3 angeordnete Rampe 10 mit einer dritten Rollvorrichtung 15 zum Bewegen der mobilen Ladesäule 2 relativ zur Rampe 10 auf. Die dritte Rollvorrichtung 15 weist mehrere Rollen oder Walzen auf. Ferner ist an der Aufnahmevorrichtung 3 eine Griffvorrichtung 9 zum Ziehen und/oder Schieben und/oder Drehen der Transportvorrichtung 1 angeordnet. An Aufnahmevorrichtungsseitenwänden sind als Kollisionsschutz Anfahrschutzvorrichtungen 13 angeordnet, welche vorzugsweise relativ zur Aufnahmevorrichtung 3 verschwenkbar sowie relativ zur Aufnahmevorrichtung 3 fixierbar ausgebildet sind.

Die mobile Ladesäule 2 weist einen internen Energiespeicher 16 zum Speichern sowie abgeben elektrischer Energie, eine Ladesäulenschnittstelle 17 mit zwei Ladebuchsen zum elektrischen Koppeln mit einem Elektrofahrzeug sowie ein Bedienpanel 18 zum Anzeigen eines Betriebszustands sowie zum Bedienen der mobilen Ladesäule 2 auf.

Fig. 2 zeigt eine bevorzugte zweite Ausführungsform eines erfindungsgemäßen mobilen Ladesäulensystems 20 schematisch in einer Seitenansicht. Das mobile Ladesäulensystem 20 weist eine Transportvorrichtung 1 und eine mobile Ladesäule 2 auf, welche auf der Transportvorrichtung 1 angeordnet ist. Die Transportvorrichtung 1 weist eine Aufnahmevorrichtung 3 mit einer Aufnahmevorrichtungsunterseite 4 und einer Aufnahmevorrichtungsoberseite 6 auf. An der Aufnahmevorrichtungsunterseite 4 ist eine erste Rollvorrichtung 5 mit mehreren Rollen oder Walzen zum Verschieben der Transportvorrichtung 1 auf einem Untergrund U angeordnet. An der Aufnahmevorrichtungsoberseite 6 ist eine zweite Rollvorrichtung 7 mit mehreren Rollen oder Walzen zum Verschieben der mobilen Ladesäule 2 relativ zur Transportvorrichtung 1 angeordnet. Die mobile Ladesäule 2 ist auf der zweiten Rollvorrichtung 7 abgestellt und mittels einer als Klemmvorrichtung ausgebildeten Befestigungsvorrichtung 8 der Aufnahmevorrichtung 3 und einer als Absatz ausgebildeten Haltevorrichtung 14 der mobilen Ladesäule 2 an der Aufnahmevorrichtung 3 befestigt. Überdies weist die Transportvorrichtung eine schwenkbar an der Aufnahmevorrichtung 3 angeordnete Rampe 10 mit einer dritten Rollvorrichtung 15 zum Bewegen der mobilen Ladesäule 2 relativ zur Rampe 10 auf. Die dritte Rollvorrichtung 15 weist mehrere Rollen oder Walzen auf. In der Aufnahmevorrichtung sind zwei Ausnehmungen 11 zum Eingreifen von Gabeln eines Gabelstaplers zum Bewegen des mobilen Ladesäulensystems 20 ausgebildet. An einer Aufnahmevorrichtungsseite ist eine Kupplungsvorrichtung 19 zum Koppeln mit einer Griffvorrichtung 9 (vgl. Fig. 1), mit einer Anhängerkupplung eines Zugfahrzeugs oder dergleichen angeordnet.

Die mobile Ladesäule 2 weist einen internen Energiespeicher 16 zum Speichern sowie abgeben elektrischer Energie, eine Ladesäulenschnittstelle 17 mit zwei Ladebuchsen zum elektrischen Koppeln mit einem Elektrofahrzeug sowie ein Bedienpanel 18 zum Anzeigen eines Betriebszustands sowie zum Bedienen der mobilen Ladesäule 2 auf.

### Bezugszeichenliste

- 1: Transportvorrichtung
- 2: mobile Ladesäule
- 3: Aufnahmevorrichtung
- 4: Aufnahmevorrichtungsunterseite
- 5: erste Rollvorrichtung
- 6: Aufnahmevorrichtungsoberseite
- 7: zweite Rollvorrichtung
- 8: Befestigungsvorrichtung
- 9: Griffvorrichtung
- 10: Rampe
- 11: Ausnehmung
- 12: Hebeanschluss
- 13: Anfahrschutzvorrichtung
- 14: Haltevorrichtung
- 15: dritte Rollvorrichtung
- 16: interner Energiespeicher
- 17: Ladesäulenschnittstelle
- 18: Bedienpanel
- 19: Kupplungsvorrichtung
- 20: mobiles Ladesäulensystem

- U: Untergrund

## Patentansprüche

1. Transportvorrichtung (1) zum Bewegen einer mobilen Ladesäule (2), welche zum Laden einer Batterie eines Elektrofahrzeugs ausgebildet ist, aufweisend eine Aufnahmevorrichtung (3) zur Aufnahme der mobilen Ladesäule (2), wobei an einer Aufnahmevorrichtungsunterseite (4) der Aufnahmevorrichtung (3) eine erste Rollvorrichtung (5) zum Bewegen der Transportvorrichtung (1) auf einem Untergrund (U) angeordnet ist,
wobei an einer Aufnahmevorrichtungsoberseite (6) der Aufnahmevorrichtung (3) eine zweite Rollvorrichtung (7) zum Bewegen der mobilen Ladesäule (2) relativ zur Aufnahmevorrichtung (3) angeordnet ist, **gekennzeichnet dadurch, dass** die Aufnahmevorrichtung (3) mehrere Ausnehmungen (11) zum Eingreifen einer Gabel eines Gabelstaplers aufweist, wobei die Transportvorrichtung (1) eine Anfahrschutzvorrichtung (13) zum Schützen der Transportvorrichtung (1) vor einer Kollision mit einem Kraftfahrzeug aufweist, und wobei die Anfahrschutzvorrichtung (13) verschwenkbar an der Aufnahmevorrichtung (3) angeordnet ist.

2. Transportvorrichtung (1) nach Anspruch 1,
**dadurch gekennzeichnet,**
**dass** die erste Rollvorrichtung (5) und/oder die zweite Rollvorrichtung (7) versenkbar oder zumindest teilweise versenkbar an der Aufnahmevorrichtung (3) angeordnet sind.

3. Transportvorrichtung (1) nach Anspruch 1 oder 2,
**dadurch gekennzeichnet,**
**dass** die Aufnahmevorrichtung (3) eine Befestigungsvorrichtung (8) zum Befestigen der mobilen Ladesäule (2) auf der Aufnahmevorrichtung (3) aufweist.

4. Transportvorrichtung (1) nach einem der vorangegangenen Ansprüche,
**dadurch gekennzeichnet,**
**dass** die Transportvorrichtung (1) eine Griffvorrichtung (9) zum Ziehen und/oder Schieben der Transportvorrichtung (1) aufweist.

5. Transportvorrichtung (1) nach einem der vorangegangenen Ansprüche,
**dadurch gekennzeichnet,**
**dass** die Transportvorrichtung (1) eine an der Aufnahmevorrichtung (3) angeordnete Rampe (10) zum Abladen der mobilen Ladesäule (2) aufweist, wobei die Rampe (10) insbesondere ausfahrbar und/oder um eine horizontale Schwenkachse verschwenkbar an der Aufnahmevorrichtung (3) angeordnet ist.

6. Transportvorrichtung (1) nach einem der vorangegangenen Ansprüche,
**dadurch gekennzeichnet,**
**dass** an der Aufnahmevorrichtung (3) mehrere Hebeanschlüsse (12) zum mechanischen Koppeln mit einem Krangeschirr eines Krans angeordnet sind.

7. Transportvorrichtung (1) nach einem der vorangegangenen Ansprüche,
**dadurch gekennzeichnet,**
**dass** die Anfahrschutzvorrichtung (13) abnehmbar ausgebildet ist.

8. Mobiles Ladesäulensystem (20), aufweisend eine mobile Ladesäule (2) zum Laden einer Batterie eines Elektrofahrzeugs und eine Transportvorrichtung (1),
**dadurch gekennzeichnet,**
**dass** die Transportvorrichtung (1) nach einem der Ansprüche 1 bis 7 ausgebildet ist.

## Revendications

1. Dispositif de transport (1) destiné à déplacer une borne de charge mobile (2) qui est destinée à charger une batterie d'un véhicule électrique, ledit dispositif de transport comportant un dispositif de réception (3) destiné à recevoir la borne de charge mobile (2), un premier dispositif de roulement (5) destiné à déplacer le dispositif de transport (1) sur une base (U) étant disposé sur une face inférieure (4) du dispositif de réception (3),
un deuxième dispositif de roulement (7) destiné à déplacer la borne de charge mobile (2) par rapport au dispositif de réception (3) étant disposé sur une face supérieure (6) du dispositif de réception (3), **caractérisé en ce que** le dispositif de réception (3) comporte une pluralité d'évidements (11) destinés à l'engagement d'une fourche d'un chariot élévateur, le dispositif de transport (1) comportant un dispositif anticollisions (13) destiné à protéger le dispositif de transport (1) contre une collision avec un véhicule automobile, et le dispositif de protection anticollisions (13) étant disposé de manière pivotante sur le dispositif de réception (3).

2. Dispositif de transport (1) selon la revendication 1,
**caractérisé en ce que**
le premier dispositif de roulement (5) et/ou le deuxième dispositif de roulement (7) sont disposés sur le dispositif de réception (3) de manière à pouvoir être abaissés ou au moins partiellement abaissés.

3. Dispositif de transport (1) selon la revendication 1 ou 2,
**caractérisé en ce que**
le dispositif de réception (3) comporte un dispositif de fixation (8) destiné à fixer la borne de charge mobile (2) sur le dispositif de réception (3).

4. Dispositif de transport (1) selon l'une des revendications précédentes,
**caractérisé en ce que**
le dispositif de transport (1) comporte un dispositif de préhension (9) destiné à tirer et/ou pousser le dispositif de transport (1).

5. Dispositif de transport (1) selon l'une des revendications précédentes,
**caractérisé en ce que**
le dispositif de transport (1) comporte une rampe (10) disposée sur le dispositif de réception (3) et destinée à décharger la borne de charge mobile (2), la rampe (10) étant disposée sur le dispositif de réception (3) notamment de manière à pouvoir être déployée et/ou pivotée sur un axe de pivotement horizontal.

6. Dispositif de transport (1) selon l'une des revendications précédentes,
**caractérisé en ce que**
une pluralité de raccords de levage (12) destiné à s'accoupler mécaniquement à un équipement d'une grue sont disposés sur le dispositif de réception (3).

7. Dispositif de transport (1) selon l'une des revendications précédentes,
**caractérisé en ce que**
le dispositif anticollisions (13) est conçu de manière amovible.

8. Système de borne de charge mobile (20), comportant une borne de charge mobile (2), destinée à charger une batterie d'un véhicule électrique, et un dispositif de transport (1),
**caractérisé en ce que**
le dispositif de transport (1) est conçu selon l'une des revendications 1 à 7.

## Claims

1. Transport device (1) for moving a mobile charging column (2) which is designed to charge a battery of an electric vehicle, having a receiving device (3) for receiving the mobile charging column (2), a first rolling device (5) for moving the transport device (1) on a base (U) being arranged on a receiving device underside (4) of the receiving device (3), wherein
a second rolling device (7) for moving the mobile charging column (2) relative to the receiving device (3) is arranged on a receiving device upper side (6) of the receiving device (3),
**characterized in that**
the receiving device (3) has a plurality of recesses (11) for the engagement of a fork of a forklift truck, wherein the transport device (1) has a collision prevention device (13) for protecting the transport device (1) from a collision with a motor vehicle, and wherein the collision prevention device (13) is pivotably arranged on the receiving device (3).

2. Transport device (1) according to Claim 1,
**characterized in that**
the first rolling device (5) and/or the second rolling device (7) are arranged on the receiving device (3) such that they can be lowered or at least partly lowered.

3. Transport device (1) according to Claim 1 or 2,
**characterized in that**
the receiving device (3) has a fastening device (8) for fastening the mobile charging column (2) on the receiving device (3).

4. Transport device (1) according to one of the preceding claims,
**characterized in that**
the transport device (1) has a handle device (9) for pulling and/or pushing the transport device (1).

5. Transport device (1) according to one of the preceding claims,
**characterized in that**
the transport device (1) has a ramp (10) arranged on the receiving device (3) for unloading the mobile charging column (2), wherein the ramp (10) is in particular arranged on the receiving device (3) such that it can be extended and/or pivoted about a horizontal pivot axis.

6. Transport device (1) according to one of the preceding claims,
**characterized in that**
a plurality of lifting connections (12) for mechanical coupling to crane lifting gear of a crane are arranged on the receiving device (3).

7. Transport device (1) according to one of the preceding claims,
**characterized in that**
the collision prevention device (13) is designed to be removable.

8. Mobile charging column system (20), having a mobile charging column (2) for charging a battery of an electric vehicle and a transport device (1),
**characterized in that**
the transport device (1) is designed according to one of Claims 1 to 7.
